(19) Europäisches Patentamt

European Patent Office

Office européen des brevets

(11) EP 1 447 120 A1

(12) EUROPEAN PATENT APPLICATION

(43) Date of publication:
18.08.2004 Bulletin 2004/34

(51) Int Cl.⁷: **B01D 37/04**, B01D 37/02

(21) Application number: 04002440.8

(22) Date of filing: 04.02.2004

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **05.02.2003 IT FI20030029**

(71) Applicant: **Vannini, Moreno**
**50127 Firenze (IT)**

(72) Inventor: **Vannini, Moreno**
**50127 Firenze (IT)**

(74) Representative: **Bardini, Marco Luigi et al**
**c/o Società Italiana Brevetti S.p.A.**
**Corso dei Tintori, 25**
**50122 Firenze (IT)**

(54) **METHOD FOR AUTOMATICALLY CONTROLLING THE FILTRATION, NAMELY BUT NOT EXCLUSIVELY OF FOOD OILS, WITH FILTRATION ADDITIVES**

(57) In a fluid filtration system with pressurized filtering means making use of filtration additives, a method for automatically controlling one ore more operation parameters of said filtering means, among which at least the dosed amount of said additives, comprising the following steps: before the start of a filtration cycle, establishing a predetermined reference value for the compressibility coefficient (nT) of the deposit that will be formed on said filtering means; during said cycle, periodically recording fluid pressure (P) and flow rate (Q) measurements upstream of said filtering means; after each recording step and on the basis of said measurements, calculating a value of said one or more operation parameters capable of keeping an evaluated compressibility coefficient (n) equal to, or in a neighborhood of, said reference coefficient (nt); and set the calculated value on said filtering means; said steps being iterated for subsequent periods up to the end of a filtration cycle.

Fig. 1

**Description**

The present invention relates to the field of the industrial filtration of solid-liquid suspensions, in particular but not exclusively of food oils. More precisely, it regards a new method for the automatic control and management of the filtration with pressurized or vacuum filtering means.

It is known that, in the industrial filtration of several kinds of fluids, namely food oils, it is made use of pressurized filtering means, having various constructions. The technique which is used is that of the so-called "flooding" filtration in which the suspension to be filtered is added with auxiliary materials that, collecting over the filtering medium (cloth, cardboard, metallic net, etc.), and mixing with the solid particles of the suspension, form on the same support a deposit (also known as "cake") having suitable porosity and permeability.

Generally, powdered filtering additives are used, such as cellulose fibers and/or fossil flours. These additives are used both during the actual filtration, and for the preliminary preparation of a "pre-coat" which, forming an oil-additive suspension over the filtering medium, protects the latter from the impurities and assists the detachment of the exhausted additive cakes that have been formed at the end of the filtration.

As far as the filtration of extra virgin olive oils is particularly concerned, the filtering additives have the function of absorbing the humidity and the impurities, among which the vegetable debris, rubbers, resins, before the polishing step and the subsequent bottling. The set up and the conservation of the correct control parameters of the system are very important in order to assure a correct performance of the filtering operations. Namely, referring to the dosing of the powdered additives, it must be considered that an insufficiently dosed amount results in a decay of the efficiency of the filtration, and consequently of the quality of the filtered oil. On the contrary, an excessively dosed amount causes wastes of additive and of oil, the latter being absorbed in an excessive manner and a significant amount thereof remains in the exhausted additive. An excessively dosed additive causes also an early exhaustion of the filtering medium, with consequent productivity losses.

In the prior art the efficiency of the filtration is checked with criteria established by the common practice and by the experience of a specialized worker, on the basis of an evaluation of the features of the product to be filtered: time of the year in which the filtration is carried out, place of origin, turbidity, humidity percentage, amount of impurities. It is easy to understand that in this way one can rarely obtain an optimum dosing, that is to say a dosing that offers the maximum cost-effectiveness of the filtration. This is even more true considering that a set up which may be correct at the start, may not remain so upon variance of the conditions of the filtering deposit.

There have been proposed some models for automatically controlling the filtration, substantially based on the mere measurement of the flow rate of filtered fluid downstream of the filter, and on the correction of the dosing of the additives in response to the changes of measured flow rate, so that a predetermined ratio is kept constant. Such models, although being a step forward with respect to completely experience-based control system, do not provide a fully satisfactory result, because the flow rate variation - responsive to the loss of pressure - is not a sufficient parameter for representing the effectiveness of the filtration, and it can not be directly and unambiguously linked with a need for increasing/decreasing the additive amount which is dosed.

The object of the present invention is to provide a method for controlling the filtration, in particular but non exclusively of food oils, with filtration additives which not only can make the filtration control completely automatic, but can also continuously adapt the control parameters of the system in order to achieve an actual optimization of the filtering effectiveness, as the working conditions vary.

It is also a particular object of the present invention to provide an automatic control method of the above mentioned kind, which can achieve, beyond the maximum quality, the maximum amount of filtered fluid for each filtration cycle, delaying as long as possible the attainment of the physical limit of the filtering medium and then the stop of the filtration cycle.

Further, it is a particular object of the present invention to provide an automatic control method of the above mentioned kind, in which the dosing of the additives is continuously adapted so as to dose the minimum additive percentage and at the same time to limit the oil wastes in the exhausted additives.

The above objects are accomplished with the method for automatically controlling the filtration, namely but not exclusively of food oils, with filtering additives according to the present invention, the essential features of which are defined in the main claim attached.

Features and advantages of the method for automatically controlling the filtration, namely but not exclusively of food oils, with filtering additives according to the present invention, will be apparent from the description of embodiments thereof, to be intended as exemplifying and not limitative, with reference to the attached drawings in which:

-  figure 1 is a schematic block diagram representing the essential components of a filtering system controlled with the method according to the invention; and
-  figures 2a and 2b, and from 3 to 5 show respective flowcharts exemplifying different embodiments of the control method according to the invention.

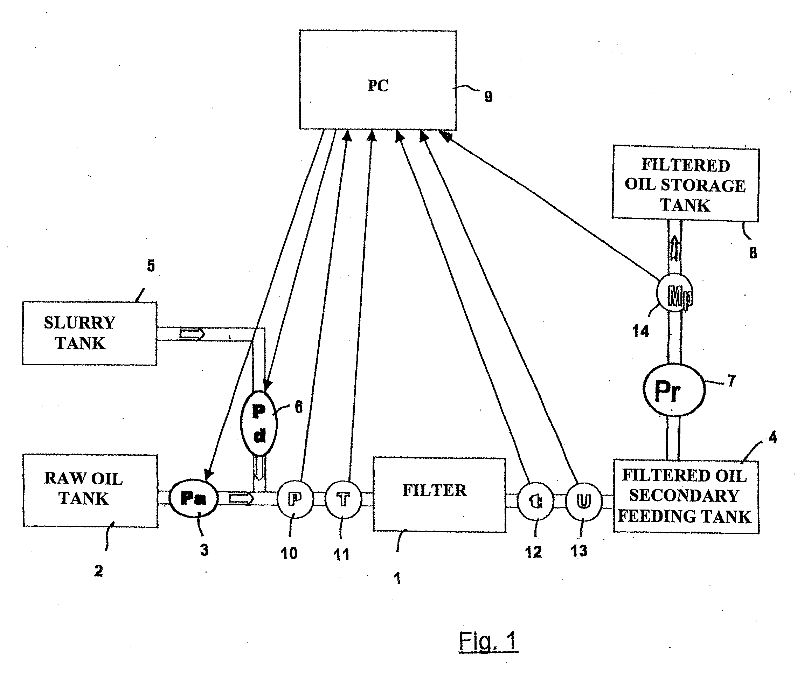

The method according to the invention is carried out in a filtration system, for example and namely of extra virgin olive oil, which can be outlined, as far as only the macroscopic components are concerned, by means of the block diagram of figure 1, to which there will be made reference hereinafter.

The system comprises a filtering unit 1, fed with raw oil to be filtered, coming from a tank 2 via a pump 3. The filtered oil is collected in a secondary feeding tank 4, from which through a pump 7 it is fed to the actual storage tank, indicated at 8. The raw oil feeding line is connected with a feeding line of a filtration slurry, i.e. mixture of additives and oil to be filtered, collected in a further tank 5 and fed by means of a relevant pump 6.

A system control network, represented by means of arrows oriented according to the direction of transmission of the data/signals, is managed by a control unit 9, typically a PC which, via a software that will be described further on, controls the operation of pumps 3 and 6 in response to signals received by: a pressure gauge 10 and a thermometer 11 placed immediately upstream of the filtering unit 1; a turbidimeter 12 and a moist-meter 13 placed between filtering unit 1 and tank 4; and a flow meter 14 placed immediately upstream of the storage tank 8.

The control method according to the invention, and then the software through which the method is carried out, is essentially based on the use of the compressibility coefficient of the filtering deposit as the fundamental diagnostic indicator of the efficiency of the filtration, to the purpose of adapting in a continuous and optimum manner the dosing of the additives in response to pressure and flow rate changes recorded by pressure gauge 10 and flow meter 14.

In greater detail, the control is based on the following differential equation, resulting from the physical theory of the filtration phenomena, known as Darcy equation.

$$\frac{dV}{dt} = \frac{A \cdot \Delta P}{\eta \cdot R}$$

wherein:

$\Delta P$ = pressure drop upstream-downstream of the filter;
$\eta$ = viscosity of the filtered fluid (known function of the temperature of the fluid to be filtered);
A = filtering surface area;
V = filtered volume;
t = time;
R = resistance opposed by the filtering medium.

In particular, the assumption is made that the resistance of the filtering medium is determined by the contribution of three elements - cloth (resistance $R_t$ retrieved by the record of the operation parameters at the start of a filtration cycle), pre-coat, deposit - with the following relation

$$R = R_t + R_{pc} + R_d$$

The size of the deposit grows as the filtration goes on; therefore, there has been proved more profitable to quantify the relevant addend as a function of the volume of filtered oil and of the concentration of the suspended solid particles (namely the filtering additives) with the relation:

$$R_d = (\alpha_{0_d} \cdot \Delta P^{n_d} \cdot c \cdot V) / A$$

wherein, besides the parameters that have been previously introduced:

c = concentration of suspended solid particles (additives and total impurities), quantified as a mass per volume unity;
$\alpha_{0d}$ = specific resistance of the deposit (with a wholly acceptable approximation, it can be assumed as a constant);
$n_d$ = compressibility coefficient of the deposit; if n=0, the resistance of the deposit is not responsive to the pressure it is loaded with (uncompressible deposit).

Also the resistance of the pre-coat, although not increasing with its width, can be characterized by an analogous equation:

$$R_{PC} = \frac{\alpha_{0_{PC}} \cdot \Delta P^{n_{PC}} \cdot m_{PC}}{A}$$

wherein:

$\alpha_{0PC}$ = specific resistance of the pre-coat (known value) ;
$m_{PC}$ = pre-coat mass which is used (known value);
$n_{PC}$ = compressibility coefficient of the pre-coat (known, assumed constant and corresponding to a substantially rigid pre-coat).

When the three resistance addends are combined with the Darcy equation, the following general equation is obtained:

$$\frac{dt}{dV} = \frac{\eta \cdot R_t}{A \cdot \Delta P} + \frac{\eta \cdot \alpha_{0d} \cdot \Delta P^{n_d - 1} \cdot c \cdot V}{A^2} + \frac{\eta \cdot \alpha_{0_{PC}} \cdot \Delta P^{n_{PC} - 1} \cdot m_{PC}}{A^2}$$

This equation can then describe time after time the phenomenon of the filtration with additives in a pressurized filter, as a function of the geometric parameters and physical entities of the filter, of the characteristics of the filtering cloths, of the filtering additives and the pre-coat, and as a function of the physical parameters of the fluid which is being filtered.

According to the invention, the above general equation is used for obtaining, via numeric or analytical integration methods (with respect to time), an equation in which the detected parameters and the additive dosing are correlated via the compressibility coefficient. It is then possible, by exploiting such equation, to determine and set a dosing which, on the basis of the detected parameters, can achieve a target compressibility coefficient ($n_T$), that is to say a coefficient which is assumed to correspond to an optimum performance of the filtration, as known from previous observations or experiences.

Thanks to periodical data acquisitions, e.g. every 360 seconds, the optimal dosing is cyclically calculated at the end of each timing step. At each timing step ($j$), the volume V of filtered oil and the residual filtering surface area S (the latter according to a simplified equation) can be calculated as follows:

$$V_j = Q_j(t_j - t_{j-1}) + V_{j-1}$$

$$S_j = S_0 - \frac{(m_{fj}) + m_{PC}}{\rho_{PC}} \varphi$$

The index j represents the current value of the parameter, whereas the index $j$-1 is the value in the previous step. Obviously, at the start, for $j$ =0, $m_f$ = V = 0, whereas the surface area is equal to the initial surface area ($S_0$). $m_f$ represents the mass of additives fed to the filter, growing function of time, as can be easily calculated from a known slurry concentration, and the slurry amount which is injected in connection with the flow rate of the fluid to be filtered.

$\varphi$ is a parameter for taking into account that the effective filtering surface area decreases as the filtration goes on. In practice, for the sake of simplicity, it can be assumed that the reduction of the surface area is a linear function of the mass of additives fed to the filter, with a slant equal to -$\varphi$. However, other equations can be used, namely equations based on geometric measurements. $S_0$, filtering surface area at the start, is a design feature of the filter, and known as such. $\rho_{pc}$ is a further reference parameter representing the density of the pre-coat.

An example of equation, obtained by an integration with the finite difference method (according to steps that are obvious *per se* and therefore not detailed), is given by the following analytic expression:

$$(m_D)_j = \left[ \frac{t_j - t_{j-1}}{V_j - V_{j-1}} - \frac{\eta R_T}{S_0 \Delta P_j} - \frac{\eta m_{PC} \alpha_{0PC}}{S_0^2 \Delta P_j^{1 - n_{PC}}} \right] \frac{S_j^2 \Delta P_j^{(1 - n_T)}}{\eta \alpha_{0DEP}}$$

All the parameters at the right-hand member of the equation are known, $n_T$ being the predetermined target value.

Then, $m_D$ is used for calculating the additive amount to be dosed (additive mass per oil mass) to be set at each timing step, by means of the equation:

$$(Do \sin g \ \%)_j = \frac{(m_D)_j}{\rho V_j} * 100$$

Wherein p is the known density of the fluid which is being filtered. The calculated value will be preferably, as a precautionary measure, limited between a "Minimum Dosing" value (e.g. 0,1%) and a "Maximum Dosing" value (e. g. 1,5%) with a conditional procedure: if $(Dosing\%)_j <$ "Minimum Dosing", then $(Dosing\%)_j =$ "Minimum Dosing"; if $(Dosing\%)_j >$ "Maximum Dosing", then $(Dosing\%)_j =$ "Maximum Dosing".

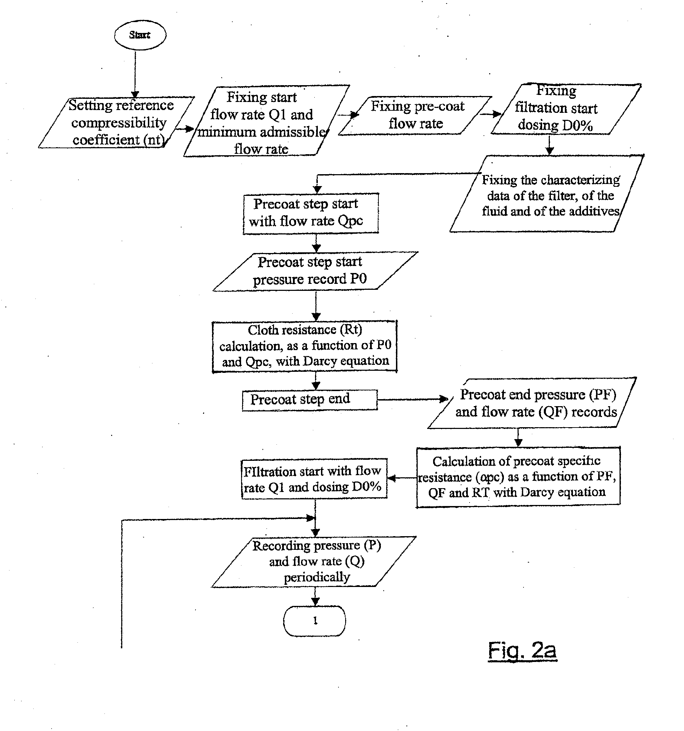

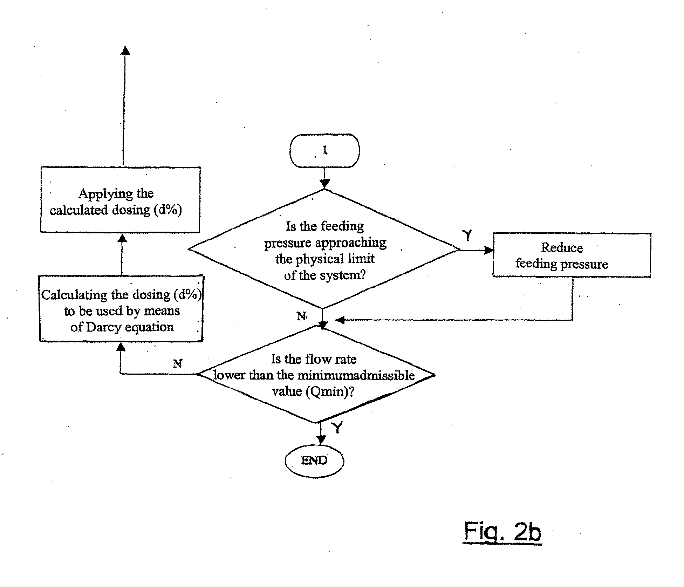

The control routine in the self-explanatory diagrams of figures 2a and 2b will be therefore carried out. The fundamental and final output is obviously a correction command of the slurry feeding pump 6.

The end of the filtration occurs when the intake pressure reaches a limit value established by the resistance of the material and the head of the feeding pump. In this respect, if the maximum cost effectiveness of the filtration is sought for, it is preferable that the control system, besides calculating the optimum dosing according to the procedure that has just been described, commands a suitable reduction of the flow rate (by commanding pump 3) as a function of the measured pressure drop, especially when the latter exceeds a predetermined value. In this way, the result is obtained of decreasing the pressure drop, prolonging the filtration. Thus, the process is more cost effective, because a greater amount of filtered fluid is obtained and the oil wastes in the pre-coat are amortized.

For instance, the control logic may provide for a tentative reduction of the flow rate, so as to keep the intake pressure substantially constant within the predetermined limit value. In this case, the end of the filtration process will occur when a minimum flow is reached, so that a continuation of the filtration appears no longer reasonable. It will be apparent that also when the volume available for the deformation of the filtering medium is completely occupied, the pressure drop is increased in such a way that, through the above mentioned control, the minimum flow is shortly reached and then the filtration cycle is stopped.

According to the invention, there is essentially proposed to use the compressibility coefficient of the deposit, calculated analytically from the macroscopic quantities, as a parameter capable of permitting a correct evaluation and of the efficiency and of the current status of the filter, for its being directly linked with the physical nature of the phenomenon and, as such, much more helpful than a mere measurement of the pressure drop.

Different types of control routines can be developed on the basis of such a principle. For instance, assuming that the flow rate Q is kept constant in a reference period (by means of the control unit 9 commanding pump 3), the following simplified equation will be applied, representing an integration of the Darcy equation in case of a constant flow rate:

$$\Delta P^{(1-n)} = \frac{\alpha_0 \cdot \eta \cdot c \cdot (1-n)}{A^2} Q^2 \cdot t$$

On this basis, a different calculation routine can be carried out. Assuming that n has a constant value, but in this case initially not predetermined, in the reference period the residual variables of the above mentioned equation are $\Delta P$ and t. If the equation is represented in a Cartesian plane with $\Delta P$ as y-coordinate and t as x-coordinate, it is clearly obtained an exponential curve. If a logarithmic scale is used, it is also clear that the exponential curve becomes a straight line the slope of which is the factor $1/(1-n)$.

Having said this, it will be possible to obtain the slope, and thus a value of n, experimentally by recording in the reference period a series of pressure measurements (and then of $\Delta P$, assuming that the outlet pressure is constant, at the ambient pressure) the result of which is the experimental definition of the above mentioned straight line. In practice, with the data acquisitions which follow one another regularly (e.g. each minute) a plurality of points will be obtained. Those points, since the process is not carried out in ideal conditions, and thus the measurements are unavoidably affected by the noise, need be interpolated, for instance via the least squares fitting, in order to trace the desired straight line.

Once n is obtained, one has, as explained above, an evaluation of the permeability condition of the filter, the increase of the compressibility coefficient being the consequence of a progressive impermeabilization and filling of the deposit, and then of an efficiency loss of the filtration. The comparison between the calculated value and a range of reference values, stored in the control unit 9, will cause the same unit to set, firstly, an automatic correction of the dosed additive amount, by commanding the slurry feeding pump 6 and, when such correction would not suffice, to correct the oil flow rate, by commanding oil feeding pump 3.

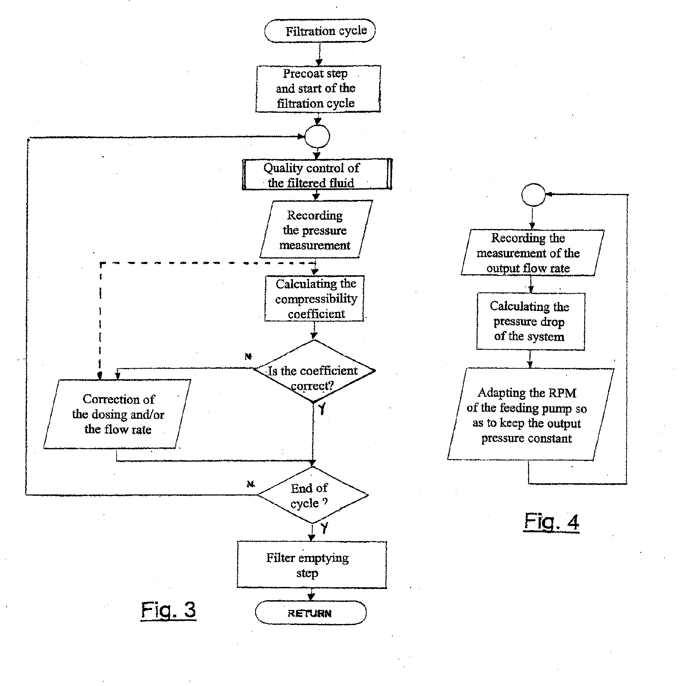

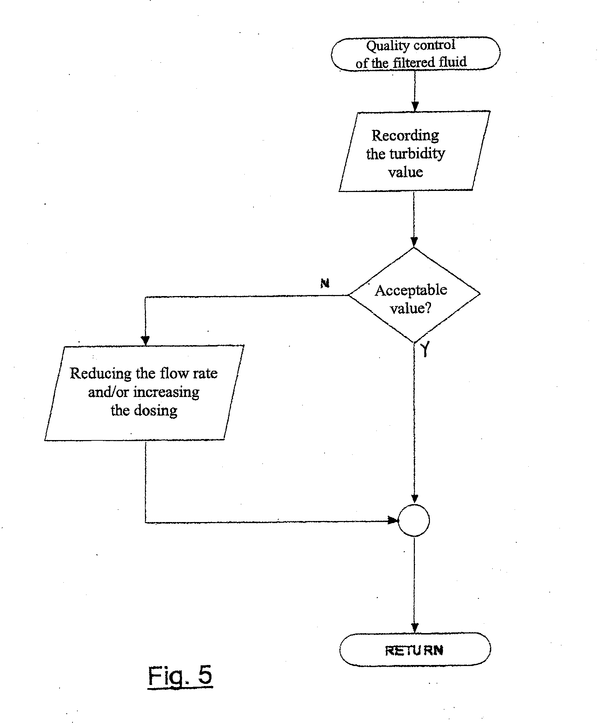

The flowcharts of figures 3 and 4, self explanatory in their turn, represent at a high level, in a filtration cycle, the control routine carried out by unit 9, according to what has just been described. Having said immediately of figure 3, in which there is represented the control ring which on the basis of the data acquisitions of the flow meter 14, corrects the operation of pump 3 so as the flow rate Q is kept constant, figure 2 shows the procedure in connection with the data the acquisitions of the pressure gage 10. Once entered the initial values of the oil and slurry flow rates, and carried out the pre-coat operation, the actual routine is started with a quality control of the filtered fluid, which will be mentioned further on with reference to figure 5.

Then, in the reference period, the pressure values are recorded and a compressibility coefficient is determined. If the same has an acceptable value, neither the dosed additive amount nor the oil flow rate are changed, otherwise a correction occurs. In both cases, the procedure starts back upstream of the quality control block, and the steps are repeated with new acquisitions of pressure in the subsequent period, period in which the dosing and the flow rate are in any case constant, at the values of the previous period or at new values.

As far as the correction block is specifically concerned, it has been mentioned that the correction is triggered by the comparison between the calculated compressibility coefficient and a predetermined range of values. The theoretic compressibility coefficient of a perfectly rigid support is null, whereas for more compressible materials as breaks or rubbers, a value of 1 or even greater can be reached. The commonly used additives have a compressibility coefficient equal to about 0.1, this value being therefore the coefficient obtainable in the condition of absence of impurities held by the additives, a condition which is reached, under a quite correct assumption, in the pre-coat step. As a consequence of the presence of impurities, the value will be therefore greater and progressively increasing as the filtration goes on.

A value under 0.8 is in any case an indication of a substantially correct permeability, and then of an efficient progress of the filtration, without the need for a correction of the dosed additive amount. However, if the obtained value of n is low, external to a predetermined left neighborhood of 0.8, there will be the confidence of a deposit which is sufficiently rigid, and then suitably permeable. The neighborhood can be defined for instance by the range 0.65÷0.8, but as a general rule it can be as narrow as desired. In this case a reduction of the dosing, with a consequent lower consumption of additives, will have the effect of decreasing the permeability of the filtering medium, but it will be tolerated all the same by the system if n, which clearly tends to increase, is maintained under 0.8, maximum admissible value. However, if n keeps on remaining external to the above mentioned neighborhood, the dosing will be further reduced, until a value suitably closed to 0.8 is reached. At this point the dosing will be kept constant.

When, however, a value is obtained that exceeds the maximum admissible value, that it to say greater to 0.8, the correction will establish an increase of the dosed additive amount, so as to increase the permeability of the deposit and bring n back to an acceptable value (in the left neighborhood 0,8 or therebelow). In this latter case, a new reduction of the dosing will be set. In order to avoid huntings of n outside the admissibility neighborhood, a procedure for automatically limiting the amount of increase/reduction of the dosing can be also provided. If the increase is not sufficient to reach the target within 2/3 subsequent periods, the flow rate of oil to be filtered will be reduced, so as to reduce the mass of impurities that becomes deposited over the filtering surface.

As the filtration goes on, a progressive and unavoidable increase of the resistance of the deposit will show up, when the same deposit is approaching the exhaustion. The final step of the filtration cycle will be carried out substantially in the same way as described above for the previous embodiment.

When, at the start of a cycle, a pressure increase is not recordable, and thus it is not possible to calculate n, the dosing will be gradually reduced, until a first value of n can be obtained. This dosing reduction is justified by the fact that, if pressure does not increase, it is owing to a deposit having an optimum permeability, and then of an overdosing of the additive.

These settings, directed both to the additive dosing and to the flow rate, permit to achieve an optimization of each filtration cycle, avoiding an early clogging of the deposit with consequent flow rate reduction and stop of the cycle, this implying an increase of the cost and troubles related to the necessary cleaning of the filter.

As mentioned above, a further control step that, according to the invention, can be advantageously demanded to unit 9 is related with a turbidity check of the filtered fluid, carried out by the relevant meter 12. As clearly shown by the flowchart of figure 5, also in this quality control the recorded value is compared with a range of reference values in order to proceed to a correction of the dosing and/or of the flow rate. It is essentially a safety control, aimed at detecting in a prompt manner an accidental event such as the crack of a filtering cloth. As the recorded value overcomes a predetermined level, the system commands a reduction of the flow rate (e.g. of 25%) and an increase of the dosing (of 25% as well). If the turbidity does not get back to correct values within a predetermined time (namely 10-15 minutes), as it should occur if the increase would have be caused simply by an incorrect setting of the operation parameters, the cycle will be stopped, awaiting an intervention of a specialized worker.

Again, for optimizing the quality of the filtered product, at the start of a new lot of product, a control of the residual humidity is carried out via moist-meter 13. Differently than the case of the filtration of the impurities, the filtration of the humidity is related only to the width of the filtering panel and to the time the flow takes to cross the same. In order to make the filtration more effective, it is then necessary to reduce the flow rate or increase the width. It is preferable to act on the width in order not to reduce excessively the flow rate values set by the main control, affecting the productivity of the cycle. Therefore, by analyzing the data recorded by the instrument, if the detected value overcomes an admissible maximum value, the cycle is stopped for carrying out a further pre-coat operation. This operation is repeated until the recorded humidity value is not set back under the admissible value. Once reached said value, the control of the filtration goes on as described above.

It has to be noted that the thermometer 11 can be used when, for production management needs, it is necessary to carry out a conversion between volume flow rate and mass flow rate, for which it is necessary to ascertain the density of the fluid (function of the temperature). It can be also fruitfully used for esteeming the viscosity of the fluid, also related with temperature.

It will be apparent from the above that the method according to the invention can accomplish the result of a really effective control, both as far as the improvement of quality of the filtered product and the save of management costs are concerned. Thanks to the constant adaptation of the conduction parameters of the system, in order to keep the filtering means in the most favorable condition, an optimization of quality and quantity of the filtered fluid is achieved, avoiding in particular an overdosing of the additives and reducing the oil wastes in the exhausted additives. All the above without relying on any empirical evaluation of a worker, but on objective indications related with the efficiency of the filtration in progress.

It must be noted that these results are obtained with minor structural changes, which can be easily brought about in existing systems. On the other hand, the method according to the above described features will be performed via a software of which the draft is completely obvious for a skilled programmer. Obviously, the examples given above for the values/ranges of admissibility of the compressibility coefficient can be different, in particular as a function of the kind of fluid to be filtered, being in any case adjusted when the system is set up. Also the amount of increase and reduction of the dosing and of the flow rate, in the embodiment with control at a constant flow rate, will have to be obviously adapted on the basis of the specific working circumstances.

More generally, although the present description is specifically referred to the filtration of food oils, it is obvious that the invention can be advantageously applied in all those cases in which the industrial filtration procedures give rise to analogous problems.

Other variants and/or modification will be brought to the method for automatically controlling the filtration, namely but not exclusively of food oils, with filtration additives according to the present invention without departing from the scope of protection of the invention itself.

**Claims**

1. In a fluid filtration system with pressurized filtering means making use of filtration additives, a method for automatically controlling one ore more operation parameters of said filtering means, among which at least the dosed amount of said additives, **characterized in that** it comprises the following steps: before the start of a filtration cycle, establishing a predetermined reference value for the compressibility coefficient (nT) of the deposit that will be formed on said filtering means; during said cycle, periodically recording fluid pressure (P) and flow rate (Q) measurements upstream of said filtering means; after each recording step and on the basis of said measurements, calculating a value of said one or more operation parameters capable of keeping an evaluated compressibility coefficient (n) equal to, or in a neighborhood of, said reference coefficient (nt); and set the calculated value on said filtering means; said steps being iterated for subsequent periods up to the end of a filtration cycle.

2. The method according to claim 1, wherein a calculation of the additive dosing on the basis of said measurements (P, Q) is carried out by imposing the predetermined value of the compressibility coefficient (nt) in a equation correlating, directly or indirectly, said dosing to said measurements (P, Q) via the compressibility coefficient.

3. The method according to claim 2, wherein said equation is obtained through the integration in time (t) of the following differential equation:

$$\frac{dV}{dt} = \frac{A \cdot \Delta P}{\eta \cdot R}$$

wherein:

$\Delta P$ = pressure drop upstream-downstream of said filtering means, obtainable from said pressure measurement;

η = viscosity of said filtered fluid, parameter which is known or obtainable from means for metering the temperature of the fluid;

A = filtering surface area of said filtering means;

V = filtered volume;

R = resistance opposed by the filtering medium, function of said compressibility coefficient.

4. The method according to claim 3, wherein said resistance (R) is assumed as the sum of a pre-coat resistance ($R_{pc}$), an intrinsical resistance of the filtering medium ($R_t$), and a resistance of the deposit ($R_d$), only the latter being a function of said compressibility coefficient.

5. The method according to claim 1, wherein said pressure measurements are recorded while said flow rate is kept constant, a linear interpolation of said pressure measurements being carried out in a pressure/time diagram, calculating the slant of the straight line thus obtained and, from said slant, said compressibility coefficient of the deposit, said coefficient being then compared with a neighborhood of said predetermined reference value and, in response, said additive dosing being left unchanged or corrected by setting a new value.

6. The method according to claim 5, wherein said additive dosing is reduced if said compressibility coefficient is below a left neighborhood of a maximum admissible value, increased if greater than said maximum admissible value and left unchanged if comprised in said neighborhood.

7. The method according to claim 6, wherein said maximum admissible value is equal to about 0.8, said left neighborhood being defined by the range 0.65÷0.8.

8. The method according to claim 6 or 7, wherein if after an increase of the dosing the compressibility index does not fall back in said neighborhood within a determined number of subsequent periods, the previously set flow rate is corrected setting a new value which is lower than the previous one.

9. The method according to any of the previous claims, wherein if at the start of the cycle a pressure increase is not recordable, and thus said compressibility coefficient can not be calculated, said additive dosing is reduced.

10. The method according to any of the previous claims, wherein if the recorded pressure is greater than a predetermined fraction of a pressure limit tolerated by said filtering means, at the end of the period the flow rate is corrected, setting a new value lower than the previous one.

11. The method according to any of the previous claims, wherein the turbidity of said fluid is periodically recorded downstream of said filtering means and, if the recorded value overcomes a predetermined reference value, the flow rate which has been previously set or established further to a previous correction, is corrected setting a new value lower than the previous one, and the dosing which has been previously set or established further to a previous correction, is corrected setting a new value greater than the previous one.

12. The method according to claim 11, wherein if, further to the corrections of flow rate and dosing, an acceptable turbidity value is not recorded in a predetermined time, the filtration cycle is sopped awaiting the intervention of a worker.

13. The method according to any of the previous claims, wherein the humidity degree in said fluid is periodically recorded downstream of said filtering means, the filtration cycle being stopped for carrying out a pre-coat step if the humidity value overcomes a predetermined maximum admissible value.

Fig. 1

EP 1 447 120 A1

Fig. 2a

Applying the
calculated dosing (d%)

Calculating the dosing (d%)
to be used by means
of Darcy equation

1

Is the feeding
pressure approaching
the physical limit
of the system?

Y

Reduce
feeding pressure

N

N

Is the flow rate
lower than the minimumadmissible
value (Qmin)?

Y

END

Fig. 2b

Filtration cycle

Precoat step
and start of the
filtration cycle

Quality control of
the filtered fluid

Recording
the pressure
measurement

Calculating the
compressibility
coefficient

N

Is the coefficient
correct?

Y

Correction of
the dosing and/or
the flow rate

M.

End of
cycle ?

Y

Filter emptying
step

RETURN

Fig. 3

Recording the
measurement of the
output flow rate

Calculating the
pressure drop
of the system

Adapting the RPM
of the feeding pump so
as to keep the output
pressure constant

Fig. 4

12

```
          ┌──────────────────────┐
          │    Quality control   │
          │  of the filtered fluid │
          └──────────────────────┘
                     │
                     ▼
            ╱──────────────────╲
           ╱      Recording      ╲
          ╱     the turbidity      ╲
          ╲        value          ╱
           ╲──────────────────╱
                     │
                     ▼
                   ╱╲
                  ╱  ╲
         N       ╱    ╲
    ┌───────────╱ Acceptable╲
    │           ╲  value?   ╱
    │            ╲        ╱
    │             ╲    ╱
    ▼              ╲╱  Y
 ╱──────────────╲   │
╱ Reducing the flow rate╲  │
│  and/or increasing   │  │
╲    the dosing       ╱  │
 ╲──────────────╱    │
    │                │
    │                ▼
    └──────────────▶○
                     │
                     ▼
          ┌──────────────────┐
          │      RETURN       │
          └──────────────────┘
```

## Fig. 5

**European Patent**
**Office**

**PARTIAL EUROPEAN SEARCH REPORT**

**Application Number**

which under Rule 45 of the European Patent Convention EP 04 00 2440
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 22 07 459 A (SCHENK FILTERBAU GMBH) 23 August 1973 (1973-08-23) * the whole document * | 1-13 | B01D37/04 B01D37/02 |
| A | EP 1 128 889 B (CARLTON & UNITED BREWERIES) 5 September 2001 (2001-09-05) * the whole document * | 1-13 | |

TECHNICAL FIELDS
SEARCHED      (Int.Cl.7)

B01D

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| THE HAGUE | 13 May 2004 | Hilt, D |

**European Patent Office**

**INCOMPLETE SEARCH SHEET C**

Application Number

EP 04 00 2440

Reason for the limitation of the search:

In view of the wording of the claims presently on file, which render it difficult, if not impossible, to determine the matter for which protection is sought, the present application fails to comply with the clarity requirements of Article 84 EPC to such an extent that a meaningful search is impossible. Consequently, the search has been carried out for those parts of the application which do appear to be clear, namely description page 4 line 20 - page 6 and figure 1.

**ANNEX TO THE EUROPEAN SEARCH REPORT
ON EUROPEAN PATENT APPLICATION NO.**                    EP 04 00 2440

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2004

| Patent document cited in search report | | Publication date | Patent family member(s) | | Publication date |
|---|---|---|---|---|---|
| DE 2207459 | A | 23-08-1973 | DE | 2207459 A1 | 23-08-1973 |
| EP 1128889 | B | 05-09-2001 | AT | 261755 T | 15-04-2004 |
| | | | AU | 769282 B2 | 22-01-2004 |
| | | | AU | 1018800 A | 26-04-2000 |
| | | | DE | 69915664 D1 | 22-04-2004 |
| | | | EP | 1128889 A1 | 05-09-2001 |
| | | | US | 6589430 B1 | 08-07-2003 |
| | | | WO | 0020094 A1 | 13-04-2000 |

EPO FORM P0459

For more details about this annex : see Official Journal of the European Patent Office, No. 12/82